# EUROPEAN PATENT APPLICATION

(11) **EP 1 502 633 A1**
(43) Date of publication of application: **02.02.2005**
(21) Application number: 02785962.8
(22) Date of filing: 28.11.2002
(51) Int. Cl.: A63F 13/00, A63F 13/10

(54) **ENVIRONMENT PARAMETER GAME PROGRAM, GAME PROGRAM CARTRIDGE, AND GAME APPARATUS**

(30) Priority: 23.04.2002 JP 2002120285
(71) Applicant: Konami Computer Entertainment Japan Inc., Shibuya-ku, Tokyo (JP)
(72) Inventor: KOJIMA, Hideo, Konami Computer Ent. Japan, Inc., Shibuya-ku, Tokyo 150-6006 (JP)
(74) Representative: Bauer, Wulf, Dr.
(86) International application number: PCT/JP2002/012427
(87) International publication number: WO 2003/090887

(57) **Abstract**

Game program is comprised of a procedure for detecting an environmental parameter through detecting means 29 and for converting the detected parameter into a consumable parameter CEV, a procedure for storing volume of the converted consumable parameter in a memory 13 and displaying on a display (such as, energy storage gauge BAG of Fig.5), a procedure for getting a character 31 in a game world to take an action on the display through which the consumable parameter is consumed (supply of charge energy CE to arms 33) according to a signal from an input device, and a procedure for renewing a value of the consumable parameter in the memory, corresponding- to the volume of the consumable parameter consumed by the character.

## Description

### TECHNICAL FIELD

The invention relates to environmental parameter game program wherein an environmental parameter for representing surroundings of a player, such as ultraviolet rays, temperature, humidity and smell is used as a parameter for game progress, and to a game program cartridge storing the environmental parameter game program therein.

And, the invention relates to a game machine wherein the environmental parameter is used as the parameter for game progress.

### BACKGROUND ART

Such kind of known game program is attached to a machine for measuring the volume of ultraviolet rays.

Most of such kind of game program is attached to the machine for measuring the volume of ultraviolet rays for the purpose of inviting a user of the machine to measure ultraviolet rays with interest for a long time. For this reason, the contents of the game is simple.

Under such situation, a player who wants to enjoy the game itself feels something lacking, and such game program is short of fun. But, players may be provided with a new kind of game which is different from the conventional one if such environmental parameter is used as the parameter for progress of the game, then development of such game program has been desired.

Then, the object of the invention is to provide the environmental parameter game program and the game program cartridge, for providing players with a new type of the game by using the environmental parameter as the important element on the progress of the game.

### DISCLOSURE OF INVENTION

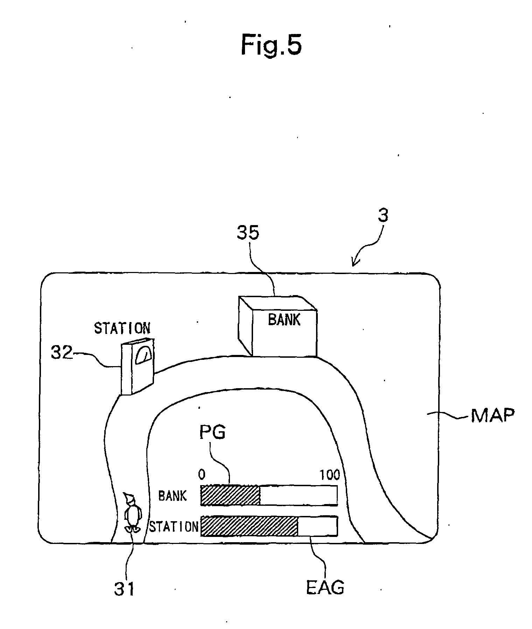

The invention is environmental parameter game program being program for getting a computer to execute the following procedures, comprising:
a procedure for detecting an environmental parameter through means for detecting environmental parameter, the means for detecting being connected with the computer, and for converting the detected environmental parameter into a consumable parameter to be consumed in a game world, being changed according to its volume;
a procedure for storing the volume of the converted consumable parameter in a memory, and for displaying the volume of the consumable parameter in the memory on a display (such as energy storage gauge EAG of Fig.5);
a procedure for getting a character in the game world to take an action through which the consumable parameter is consumed (such as supply of charge energy CE to arms 33) through a picture on the display according to a signal from an input device; and
a procedure for renewing a value of the consumable parameter stored in the memory, corresponding to the volume of the consumable parameter consumed by the character in the game world.

According to this aspect of the invention, the consumable parameter converted from the environmental parameter, such as ultraviolet rays can be consumed by the character in the virtual world in the game with the operation of the input device by a player, so that a new kind of game making use of a parameter concerning surroundings of a player can be provided.

Besides, in another aspect of the invention, the environmental parameter is volume of ultraviolet rays.

According to this aspect of the invention, a new kind of game making use of sunshine can be provided by using ultraviolet rays as the environmental parameter.

Besides, in another aspect of the invention, the procedure for detecting environmental parameter through the means for detecting and for converting the detected environmental parameter into a consumable parameter to be consumed in a game world according to its volume comprises a procedure for sampling the environmental parameter detected from the means for detecting every predetermined time, a procedure for integrating the volume of the environmental parameter every sampling, and a procedure for converting the integrated environmental parameter into the consumable parameter to be consumed in the game world, according to its volume.

According to this aspect of the invention, the value of the environmental parameter is sampled at regular intervals and the integrated value of the sampled is converted into the consumable parameter, so that the correct state of the environmental parameter in the surroundings where the player enjoys the game appears in the game. Then, the environmental parameter game program having a lot of funs can be provided.

Besides, in another aspect of the invention, the consumable parameter is consumed in order to get an energy supply subject which the character uses in the game world to take an action.

According to this aspect of the invention, the consumable parameter is consumed in order to get an energy supply subject which the character uses to take an action, so that the behavior of the character can be closely related to the state of the consumable parameter, and the environmental parameter game program having a lot of funs can be provided thereby.

Besides, another aspect of the invention is a game program cartridge for storing memory medium readable with a computer, the memory medium storing the environmental parameter game program, comprising:
means for detecting environmental parameter installed on the cartridge;
both the memory medium and the means for detecting provided being free to connect with the computer;
the means for detecting environmental parameter having an environmental parameter sensor on a case of the cartridge, the environmental parameter sensor being provided at an exposure portion exposed outside a main body of a computer when installing the cartridge on the main body.

According to this aspect of the invention, the environmental parameter sensor is installed on the case of the cartridge storing the environmental parameter game program, so that the environmental parameter game can be executed with only installation of the cartridge storing the environmental parameter game program on a computer without installing a special environmental parameter sensor on a computer. Then, the burden of the player is small.

Furthermore, another aspect of the invention is a game machine, comprising:
means for detecting environmental parameter;
parameter converting means for detecting the environmental parameter through the means for detecting environmental parameter and for converting the detected environmental parameter into a consumable parameter to be consumed in a game world, being changed according its volume;
means for storing and displaying parameter for storing volume of the converted consumable parameter in a memory, and for displaying the volume of the consumable parameter in the memory on the display;
means for consuming parameter for getting a character in the game world to take an action through which the consumable parameter is consumed through a picture on the display according to a signal from an input device; and
parameter renewal means for renewing a value of the consumable parameter stored in the memory, corresponding to the volume of the consumable parameter consumed by the character in the game world.

### BRIEF DESCRIPTION OF DRAWINGS

Fig.1 is an external view of a portable game machine to which the invention is applied;
Fig.2 is a control block diagram of the game machine of Fig.1;
Fig.3 is a view of a game program cartridge;
Fig.4 is a view of a picture controlled to be displayed on a display by environmental parameter game program;
Fig.5 is a view of a picture controlled to be displayed on the display by the environmental parameter game program;
Fig.6 is a view of a picture controlled to be displayed on the display by the environmental parameter game program; and
Fig.7 is a view of a picture controlled to be displayed on the display by the environmental parameter game program

### BEST MODE FOR CARRYING OUT THE INVENTION

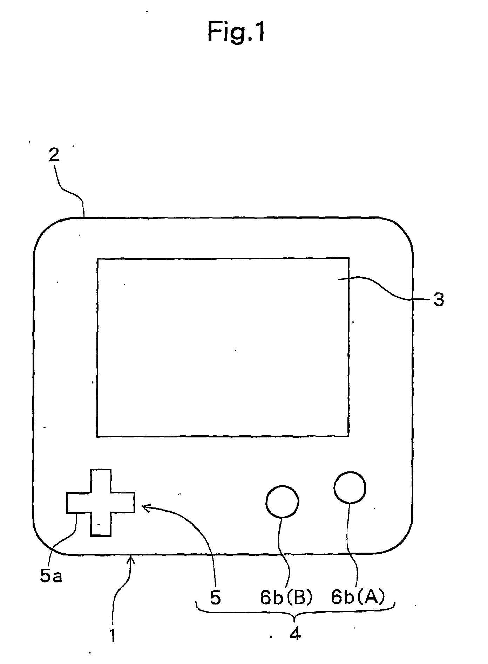

Fig.1 shows a portable game machine as a game machine comprising a computer. As shown in Fig.1, a portable game machine 1 has a main body 2, a reflective liquid crystal display 3 attached to the main body 2 as a display unit, and an input device 4. The input device 4 has a direction indicating switch 5 and a plurality of push button switches 6a, 6b. The direction indicating switch 5 has a cross type of operation portion 5a and outputs a signal corresponding to each operation in up and down directions and in right and left directions of the operation member 5a (the operation of pushing down each end portion of the upper portion, the lower portion, the right portion or the left portion of the operation member).

A structure of such input device 4 is well-known, so various transformations are possible. For instance, four push buttons may- be respectively located in upper and lower hands and in right and left hands, in place of the operation member 5a. The number of the push button switches 6a, 6b and their location may be changed in various forms. In the following explanation, the push button switch 6a is referred to as A button, and the push button switch 6b is as B button. If it is not necessary to differentiate both push buttons 6a, 6b from each other, but, each button is referred to as a button 6 in the following descriptions. And, the game machine 1 is provided with a power switch, an operation member for adjusting sound volume and the like, but these are omitted.

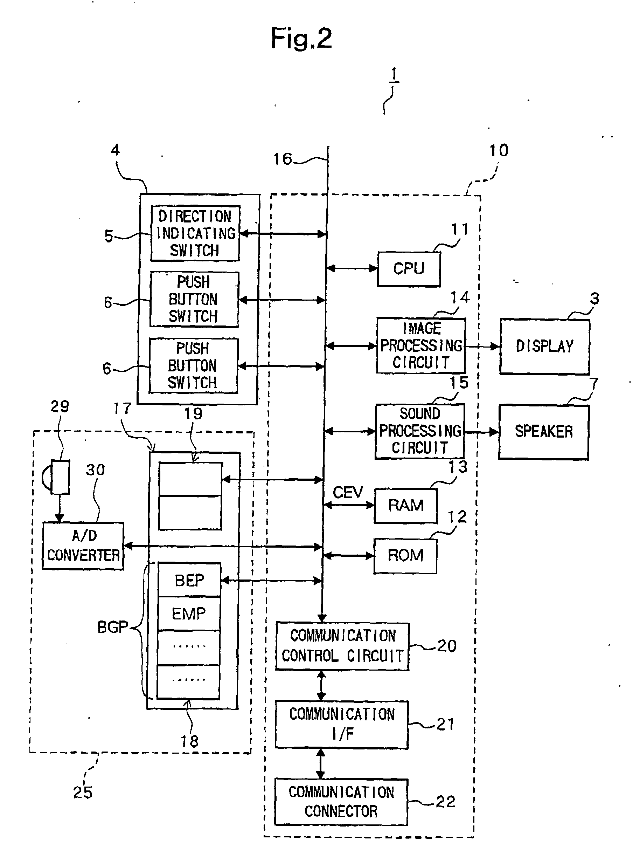

Fig.2 shows a structure of a control unit 10 provided at the game machine 1. The control unit 10 is a computer making use of a microprocessor, main body of which is a CPU 11. A ROM 12 (read only memory) and a RAM 13 (random access memory) as main memories , an image processing circuit 14 and a sound processing circuit 15 are respectively connected with the CPU 11 through a bus 16. A program necessary for basic control of the game machine 1 (booting processing,. for instance) is stored in the ROM 12. A work area with respect to the CPU 11 is secured in the RAM 13. The image processing circuit 14 controls the liquid crystal display 3 according to a picturing instruction from the CPU 11 so as to display a predetermined image on its scope. The sound processing circuit 15 produces an analog sound signal according to a pronouncing instruction from the CPU 11 so as to output to a speaker 7.

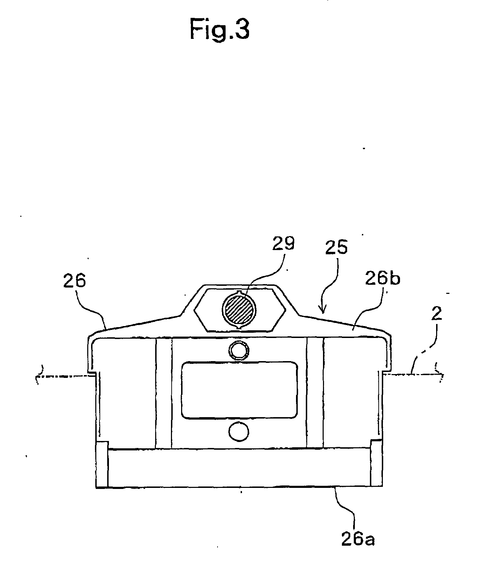

The respective switches 5, 6 of the input device 4 are connected with the CPU 11 through the bus 16, and the CPU 11 can thereby judge the state of operation of each switch 5, 6. Besides, an external memory 17, which is an object different from the control unit 10, is connected with the bus 16. The external memory 17 is stored in a cartridge 25 which is attachable and detachable to the main body 2, as shown in Fig.3, and a ROM 18 as memory medium and a RAM 19 (readable and writable storage element) as a reloadable user memory are stored therein. Game program, such as environmental parameter game program BGP, and various data for its performance are stored in the ROM 18 in advance. The reloadable ROM, such as a flash memory, is used as the memory 19, and save data of a game, for instance, are stored in the memory according to necessity. Various storage mediums, such as a magnetic storage medium, an optical storage medium and a photoelectric magnetic storage medium, may be used as the storage medium of the external memory 17, in addition to a semiconductor storage element. An interface circuit intervenes between the bus 16 and each element, if necessary, but this is not shown. Various kinds of control units 10 may be used without limiting to the above-mentioned structure.

A communication control circuit 20 is connected with the CPU 11 through the bus 16 in order to connect the game machine 1 with a predetermined communication line, another game machine or the like. A communication connector 22 is connected with the communication control circuit 20 through a communication interface 21. As the communication control circuit 20, one functioning as a modem or a network interface by combining a DSP (digital signal processor) and software with each other, for instance, may be utilized. The communication connector 22 and/or the interface 21 may be provided as a peripheral equipment to be connected with the game machine 1 outside.

As shown in Fig.3, the cartridge 25 has a case 26 made of resin, and the case 26 is free to be attached to and detached from the main body 2 of the portable game machine 1. The external memory 17 is stored inside the case 26, and a lower portion of the case 26 in the figure is a terminal portion 26a for connecting an electronic machine, such as the external memory 17 stored in the case, and the bus 16 of the control unit 10 with each other. An ultraviolet sensor 29 is provided at an exposure portion 26b on the upper portion of the case 26 in the figure, which is exposed outside the main body 2 when installing the cartridge 25 on the main body 2 of the portable game machine 1, and an A/D converter 30 stored in the cartridge 25 is connected with the ultraviolet sensor 29, as shown in Fig.2. The A/D converter 30 is connected with the terminal portion 26a, and is free to be connected with the bus 16 of the control unit 10 of the game machine 1.

With the game machine 1 having such a structure, various kinds of games can be played on a picture of the display 3 by loading the program stored in the ROM 18 of the external memory 17 in the RAM 13 and executing the loaded with the CPU 11. Besides, the game machine 1 is connected with a predetermined network, controlling the communication, control circuit 20, so that messages can be exchanged and a battle type of game can be enjoyed between the game machine 1 and other one.

After a predetermined initializing operation (such as the operation of power on) in the game machine 1, the CPU 11 firstly executes a predetermined initialization processing according to a program of the ROM 12. After finishing the initialization, the CPU 11 starts to read the environmental parameter game program BGP, which is stored in the ROM 18 of the external memory 17, and starts game processing according to this.program. When a player operates the input device 4 for start of the game, the CPU 11 starts various controls necessary for performance of the game according to the routines of the environmental parameter game program BGP.

When starting the game, the environmental parameter game program BGP instructs the CPU 11 to execute environmental energy stock program BEP comprising the game program BGP. Receiving this instruction, the CPU 11 reads the environmental energy stock program BEP out of the ROM 18, and executes this program.

The environmental energy stock program BEP instructs the CPU 11 to sample the volume of ultraviolet sensed by the ultraviolet sensor 29 every predetermined time, to integrate the ultraviolet volume every sampling, and to store the integrated in the RAM 13. Furthermore, the environmental energy stock program BEP instructs the CPU 11 to convert the integrated ultraviolet volume into charge energy volume CEV which is a consumption type parameter consumable in a game world, and to store in the RAM 13 in a similar way. The CPU immediately executes processing for sampling the ultraviolet volume outputted from the ultraviolet sensor 29 installed on the cartridge 25 through the A/D converter 30 every predetermined time, integrating the ultraviolet volume each sampling, storing the integrated in the RAM 13, converting the integrated ultraviolet volume into the charge energy as the parameter consumable in the game world, and storing the converted in the RAM 13 as the charge energy volume CEV.

The ultraviolet sensor 29 always detects the ultraviolet volume radiated on the sensor 29 and outputs the detected value to the A/D converter 30. The CPU 11 thus easily integrates the ultraviolet volume and easily converts the integrated into the charge energy volume CEV. The charge energy indicated by the charge energy volume CEV is used as one for various arms and units to be used in the virtual world in the game. When converting the accumulated ultraviolet volume into the charge energy, conversion into the parameter which can be easily dealt in the game world is preferable, and the optional setting is possible.

Speed of integrating the ultraviolet volume on the basis of the environmental energy stock program BEP, that is, speed of integrating the charge energy volume CEV depends on the surroundings where the ultraviolet sensor 29 of the cartridge 25 is placed. If the portable game machine 1 is in the outdoor, that is, if a player enjoys the game in the open air, the speed of integrating the charge energy volume CEV becomes faster since the ultraviolet volume is more than the indoor. If the portable game machine 1 is at a sunlit place of the outdoor, the integrating speed furthermore becomes faster.

Then, a player plays the game at sunny.place of the outdoor where sunlight can be directly received if the player expects an event for which more charge energy volume CEV is needed by a development of the scenario of the environmental parameter game program BGP. On the contrary, the player plays the game in the shade of the indoor if the player thinks so much charge energy CEV is not necessary. The environmental parameter game program BGP thus requires the player's positive actions, and the player can feel that his (her) own actions and the contents of the game are united with each other, and can enjoy the game with realism.

The ultraviolet sensor 29 can grasp ultraviolet rays, depending on the ultraviolet surroundings where the game machine 1 is placed, that is, on the volume of the sunlight since the sensor 29 is exposed outside the main body 2 when installing the cartridge 25 on the main body 2 of the game machine 1, as shown in Fig.3.

The environmental energy stock program BEP takes a procedure for displaying the thus integrated ultraviolet volume, that is , the charge energy volume CEV as energy stock gauge EAG on an appropriate area on the display 3, as shown in Fig.5 for instance. At the same time, the program BEP processes for displaying an image of a supply station 32 for supplying a character 31 appearing in the environmental parameter game program BGP with the stored charge energy on a predetermined position on a map MAP in the game world where the scenario of the environmental parameter game program BGP is developed. Then, the player confirms the images of the supply station 32 and the energy stock gauge EAG on the map MAP on the display 3, so that the player can easily see the charge energy volume usable at the present and the position of the supply station 32 for supplying the charge energy.

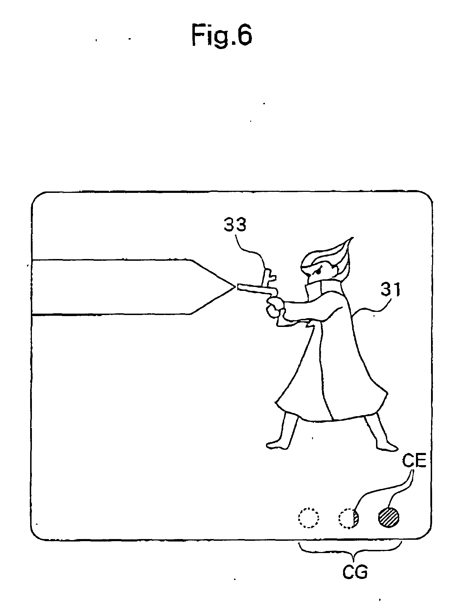

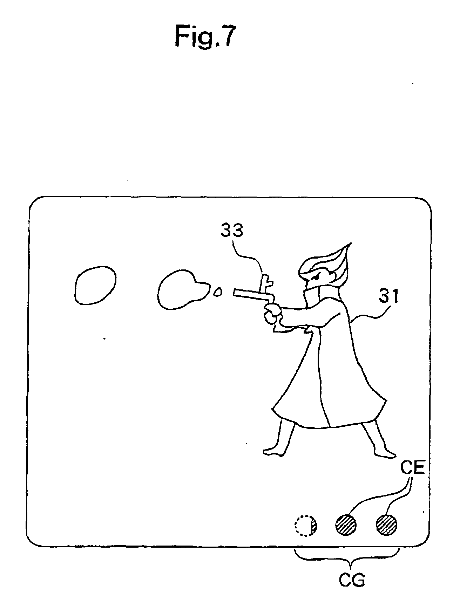

The character 31 appearing in the environmental parameter game program BGP can bring arms 33 with himself (herself), as shown in Figs.6 and 7 for instance. The arms 33 is set so as to be operated through energy source which is the charge energy.

That is, program for controlling the charge energy is stored in the environmental parameter game program BGP as charge energy control program EMP. The charge energy control program EMP judges as to whether or not the arms 33 or the other energy supply subject is set on the supply station 32 displayed on the map MJAP after the input device 4 outputs a proper signal with the operation by a player through the input device 4, then the character 31 displayed on the display 3 takes an action. When judging the setting of the arms 33 or the other energy supply subject on the supply station 32, the program EMP starts the processing for supplying the energy supply subject with the charge energy from the supply station 32.

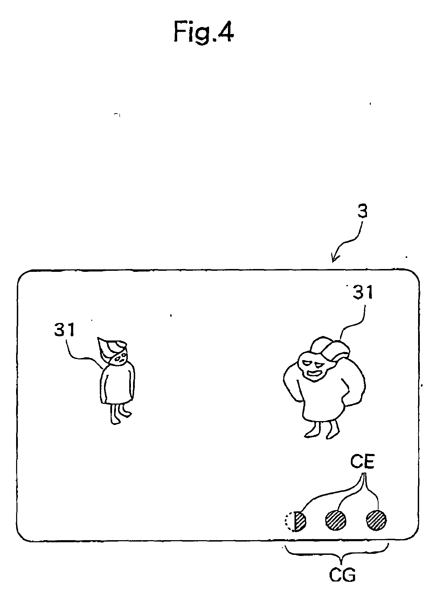

When a player instructs supply of energy to the energy supply subject through an operation of the input device 4, the charge energy control program EMP processes for supplying the energy supply subj ect with the charge energy CE within the bounds of the charge energy volume CEV corresponding to the volume of ultraviolet rays which is detected by the ultraviolet sensor 29 and accumulated so as to be stored in the RAM 13. After supplying the energy supply subject with predetermined volume of the charge energy CE, the charge energy control program EMP controls to display the charge state of the charge energy CE of the energy supply subj ect on the display 3, for instance, by displaying a charge gauge CG as shown in Fig.4. This procedure is attained in such a manner that the charge energy CE which a player instructs through the operation of the input device 4 is subtracted from the charge energy volume CEV stored in the RAM 13 and a renewed value is obtained through this subtraction procedure, and at the same time, the energy stock gauge EAG on the display 3 is renewed, corresponding to the renewed charge energy volume CEV, and the renewed charge gauge EAG is displayed. The above-mentioned procedure is attained in such a manner that the area highlighted with oblique lines of the energy stock gauge EAG of Fig. 5 is reduced for the left side in the figure so that the renewed gauge EAG can be obtained, and the renewed gauge EAG is displayed. The charge energy control program EMP stores the total energy volume which is given to and stocked in the energy supply subject in the RAM 13 so that the value can be always renewed by the above-mentioned charge operation.

Furthermore, the charge energy control program EMP takes a procedure for changing forms of displaying of the charge gauge CG of the energy supply subject which is a subject for charge, the gauge being displayed on the display 3 corresponding to the charge volume of the charge energy CE so that a player can visually show how much energy the energy supply subject received with the operation for charge by the player. When the charge energy CE is given to. the arms 33 in the state as shown in Fig. 6, for instance, the volume of the charge energy CE charging the arms 33 is displayed with the charge gauge CG, changing the areas highlighted with oblique lines in the three circles as shown in Fig.7.

The charge energy control program EMP also takes a process for temporarily storing the charge energy CE which the player gave the energy supply subject once. The charge energy control program EMP starts to take a process for temporary storage of the charge energy from the energy supply subject to an image portion defined as a storage place of the charge energy CE, that is, to a temporary storage area 35 displaying "BANK" thereon as shown in Fig.5 when a player moves the character 31 on the map MAP to the temporary storage area 35 through the operation of the input device 4, and the input of the predetermined temporary storage instruction through the operation of the input device 4 is judged.

That is, when the player instructs the temporary storage of the energy into the temporary storage area 35 with the operation of the input device 4 , the charge energy control program EMP processes in order to read out the total volume of the charge energy stored in the energy supply subject (for instance, the volume shown with the charge gauge CG) by referring to the RAM 13 and to temporarily store the charge energy CE into the temporary storage area 35 within the bounds of the total volume of the charge energy.

When supplying the temporary storage area 35 with predetermined volume of the charge energy CE, the charge energy control program EMP controls to display the state of storage of the charge energy CE of the temporary storage area 35 by displaying a temporary storage gauge PG on the display 3, as shown in Fig.5. This process is attained in such a manner that the volume of the charge energy CE temporarily stored, which is instructed by a player through the operation of the input device 4, is subtracted from the total energy volume of the energy supply subject stored in the RAM 13 and a renewed value of the total energy volume is obtained through this subtraction procedure, and at the same time, the charge gauge CG on the display 3 is renewed, corresponding to the charge energy volume temporarily stored, and the renewed charge gauge CG is displayed.

The above-mentioned process is attained in such a manner that the charge energy CE moved from the arms 33 in the state of Fig.7 temporarily stored in the temporary storage area 35, and then the charge gauge CG is displayed, reducing as shown in Fig. 6 areas highlighted with oblique lines of the three circles, corresponding to the volume of the charge energy CE temporarily stored in the temporary storage area 35.

Besides, the following process is attained that the temporary storage gauge PG for showing the temporary storage volume of the charge energy CE in the temporary storage area 35 is displayed by extending the area highlighted with oblique lines as shown in Fig.5 on the right side of the figure according to the volume of the temporarily stored charge energy CE so that the gauge PG can be renewed. And, such a process is attained that the value for showing the total charge energy volume of the energy supply subject in the RAM 13 is reduced, corresponding to the temporarily stored charge energy CE to get a renewal value, and the value in the RAM 13 for showing the total energy volume of the charge energy CE temporarily stored in the temporary storage area 35 is increased, corresponding to the newly stored charge energy CE to get a renewal value.

The charge energy CE charging the energy supply subject, such as the arms 33, is consumed whenever the arms 33 is used with the operation of the input device 4 by a player, as shown in Fig.6 and Fig.7. This consumption procedure is attained in such a manner that the charge energy control program EMP judges the instruction of using the arms 33 through the operation of the input device 4 by a player, reduces and renews the value in the RAM 13 showing the total volume of the charge energy stored in the arms 33 according to the contents of the instruction, that is, according to an attack pattern by the arms 33 (the volume of energy to be consumed) , and changes the corresponding charge gauge CG so as to correspond to the total volume of the charge energy in the RAM 13 which was reduced and renewed. In this case, the areas of the three circles in Figs.6, 7 highlighted with oblique lines are changed so as to correspond the consumed volume of the charge energy.

The invention can be applied to any kind of game program as long as the program processes in order to total the volume of ultraviolet rays obtained with the ultraviolet sensor 29 , store the value in a memory, such as the RAM 13, set the energy parameter corresponding to the volume of the ultraviolet rays totaled in a game, and change the behavior of the character 31 in the game by consuming the energy parameter.

Besides, a plurality of game machines (computers) may be connected with each other through a communication line, the ultraviolet sensor 29 may be connected with one of the game machines, so that the game machine connecting no ultraviolet sensor 29 therewith executes a card game as the environmental parameter game program BGP, and then a rare card can appear in the game in the game machine having no sensor according to the volume of the ultraviolet rays integrated in the game machine having the sensor 29.

Furthermore, the environmental parameter game program BGP may store a procedure for connecting a game machine (computer) with a weather forecast site through a communication line such as the Internet, and for obtaining future weather forecast, that is, information of ultraviolet rays.

Furthermore, the environmental parameter according to the invention is not limited to the volume of ultraviolet rays of the sun, but may be various kinds of parameters of the surroundings where the game machine (computer) is placed, such as infrared radiation, visual rays, temperature, humidity, smell, discomfort index. Then, these indexes are integrated, so that the integrated can be of course made use of as an energy parameter in the environmental parameter game program BGP.

Furthermore, the energy supply subject to which the charge energy is supplied in order to use in the virtual world in the game may be various kinds of equipments or appliances to be used in the game world in addition to the arms 33.

Besides, the parameter to be converted from the environmental parameter, such as ultraviolet rays in order to use in the game world may be a life parameter to be used as action energy of the character in the game world, in addition to the energy parameter which is the source of the energy for driving the above-mentioned various kinds of appliances, or may be an economic parameter for functioning as money circulating in the game world. In any case, any consumable parameter is available as long as the parameter is consumed with the operation of the input device 4 by a player, and a character in the game world can take some action thereby.

### INDUSTRIAL APPLICABILITY

An environmental parameter, such as ultraviolet rays, is converted into a consumable parameter so that a character can consume the converted consumable parameter in a virtual world in a game with an operation by a player through an input device. Then, a new kind of game making use of the parameter concerning surroundings of the player can be provided.

## Claims

1. Environmental parameter game program being program for getting a computer to execute the following procedures, comprising:
a procedure for detecting an environmental parameter through means for detecting environmental parameter, said means for detecting being connected with said computer, and for converting said detected environmental parameter into a consumable parameter to be consumed in a game world, being changed according to its volume;
a procedure for storing said volume of said converted consumable parameter in a memory, and for displaying said volume of said consumable parameter in said memory on a display;
a procedure for getting a character in said game world to take an action through which said consumable parameter is consumed through a picture on said display according to a signal from an input device; and
a procedure for renewing a value of said consumable parameter stored in said memory, corresponding to said volume of said consumable parameter consumed by said character in said game world.

2. The environmental parameter game program according to claim 1, wherein said environmental parameter is volume of ultraviolet rays.

3. The environmental parameter game program according to claim 1, wherein said procedure for detecting environmental parameter through said means for detecting and for converting said detected environmental parameter into a consumable parameter to be consumed in a game world according to its volume comprises a procedure for sampling said environmental parameter detected from said means for detecting every predetermined time, a procedure for integrating said volume of said environmental parameter every sampling, and a procedure for converting said integrated environmental parameter into said consumable parameter to be consumed in said game world, according to its volume.

4. The environmental parameter game program according to claim 1, wherein said consumable parameter is consumed in order to get an energy supply subject which said character uses in said game world to take an action.

5. A game program cartridge for storing memory medium readable with a computer, said memory medium storing said environmental parameter game program according to claim 1 therein, comprising:
means for detecting environmental parameter installed on said cartridge;
both said memory medium and said means for detecting provided being free to connect with said computer;
said means for detecting environmental parameter having an environmental parameter sensor on a case of said cartridge, said environmental parameter sensor being provided at an exposure portion exposed outside a main body of a computer when installing said cartridge on said main body.

6. A game machine, comprising:
means for detecting environmental parameter;
parameter converting means for detecting said environmental parameter through said means for detecting environmental parameter and for converting said detected environmental parameter into a consumable parameter to be consumed in a game world, being changed according its volume;
means for storing and displaying parameter for storing volume of said converted consumable parameter in a memory, and for displaying said volume of said consumable parameter in said memory on said display;
means for consuming parameter for getting a character in said game world to take an action through which said consumable parameter is consumed through a picture on said display according to a signal from an input device; and
parameter renewal means for renewing a value of said consumable parameter stored in said memory, corresponding to said volume of said consumable parameter consumed by said character in said game world.
